# EUROPÄISCHE PATENTSCHRIFT

(11) **EP 0 935 832 B1**
(45) Veröffentlichungstag und Bekanntmachung des Hinweises auf die Patenterteilung: **30.01.2002**
(21) Anmeldenummer: 97947720.5
(22) Anmeldetag: 31.10.1997
(51) Int. Cl.: H02B 13/025

(54) **MITTELSPANNUNGSSCHALTANLAGE MIT STÖRLICHTBOGEN-ABSORBEREINRICHTUNG**
MEDIUM VOLTAGE SWITCHGEAR WITH ACCIDENTAL ARC ABSORBER DEVICE
APPAREILLAGE DE COMMUTATION MOYENNE TENSION COMPRENANT UN DISPOSITIF ABSORBEUR D'ARC ACCIDENTEL

(30) Priorität: 31.10.1996 DE 19646547
(43) Veröffentlichungstag der Anmeldung: 18.08.1999
(73) Patentinhaber: SIEMENS AKTIENGESELLSCHAFT, 80333 München (DE)
(72) Erfinder: BETZMANN, Martin, D-61273 Wehrheim (DE); HARBECKE, Günter, D-63526 Erlensee (DE); SPÄCK, Helmut, D-63739 Aschaffenburg (DE)
(86) Internationale Anmeldenummer: DE9702572
(87) Internationale Veröffentlichungsnummer: WO9819377

(56) Entgegenhaltungen:
- DE-A- 2 817 418
- DE-A- 2 915 504
- DE-A- 4 220 790
- DE-B- 1 123 734
- DE-C- 696 993
- DE-U- 9 102 513
- DE-U- 9 112 916

## Beschreibung

Die Erfindung betrifft eine Mittelspannungsschaltanlage mit mehreren gekapselten Schaltfeldern zur Aufnahme von Schaltanlagenelementen, wie Schaltgeräte, Kabelanschlüsse und Sammelschienen, mit zur Druckentlastung bei Störlichtbögen im rückwärtigen Bereich vorgesehenen Kanälen.

Eine Mittelspannungsschaltanlage der eingangs definierten Art ist beispielsweise durch die DE-U-91 12 916 bekannt. Die Mittelspannugsschaltanlage ist hier durch störlichtbogenfeste Schaltfelder realisiert. Innerhalb der Schaltfelder befinden sich entsprechend dem Anlagentyp u.a. Schaltgeräte, Kabelanschlüsse, Sammelschienen etc., wie sie im Bereich der Mittelspannungstechnik für die Energieversorgung, insbesondere für Industriebetriebe, eingesetzt sind.
Für den Störlichtbogenfall sind Gehäuserückwände im Mittenbereich gegen eine starre, gemeinsame Rückwand partiell öffnend ausgebildet, so daß der Druck und die Wärme nach außen über Kanäle abgeben werden kann. Sogenannte Lenkleisten bewirken zusätzlich eine gerichtete Ableitung der zwischen den Gehäuserückwänden und der starren gemeinsamen Rückwand entweichenden Gase.

Durch DE-U1-91 02 513 ist darüber hinaus eine Mittelspannungs-Schaltanlage bekannt, die für mehrere nebeneinander angeordnete Schaltfelder einen gemeinsamen schachtartigen Aufbau enthält, der oberhalb der Schaltfelder angeordnet ist. Im Störfall dringen die heißen Gase durch sich öffnenden Klappen der Schaltfelder in den schachtartigen Aufbau und werden dort durch ein den schachtartigen Aufbau abdeckendes Metallgittergeflecht abgekühlt.

Der deutschen Offenlegungsschrift DE 28 17 418 A1 ist eine Schaltanlage zu entnehmen, bei der die im Störlichtbogenfall im Schaltfeld entstehenden Gase sowohl nach hinten parallel zur Rückseite in einen Ausströmkanal als auch nach oben in eine Filterkammer abgeführt werden. Der Ausströmkanal und die Filterkammer sind im Gasaustrittsbereich zur Wärmeabfahr u. a. mit Stahlwolle versehen.

Die der Erfindung zugrundeliegende Aufgabe gesteht darin, den Grad der Abkühlung der beim Störlichtbogen entstehenden heißen Gase erheblich zu vergrößern und insbesondere die Personensicherheit derartiger Mittelspannungsschaltanlagen wesentlich zu verbessern, wobei die konstruktiven Gegebenheiten der unterschiedlichen Anlagentypen weitestgehend unverändert beizubehalten sind.
Erfindungsgemäß wird dies durch die Merkmale
- 1.1: jedes Schaltfeld der Mittelspannungsschaltanlage ist in den Schaltanlageelementen separat zugeordnete Funktionsraumbereiche aufgeteilt,
- 1.2: die Funktionsraumbereiche weisen jeweils eine eigene Absorbereinrichtung auf,
- 1.3: mindestens eine der den Funktionsraumbereichen zugeordnete Absorbereinrichtung ist aus einem rückseitigen und/oder seitlichen Bereich der Mittelspannungsschaltanlage herausgeführt,
erreicht.

Mit dem Einsatz der einem jeden Funktionsraumbereich zugeordneten Absorbereinrichtung ist eine derartig gerichtete Gasströmung innerhalb der Mittelspannungsschaltanlage erreicht, daß die Abkühlung der Gasströme direkt im Entstehungsbereich zielgerichtet erfolgt, ohne das wesentliche konstruktive Veränderungen innerhalb der Funktionsraume vorgesehen sein müssen.
Für Mittelspannungsschaltanlagen als sogenannte Netzstationen, die außerhalb von Gebauden frei aufgestellt sind, sind die heißen Gase direkt von der bzw. den Absorbereinrichtungen druckgemindert und wärmeabsorbiert aus den Anlagen herausgeführt.

Gemäß einer vorteilhaften Ausgestaltung der Erfindung sind die Merkmale
- 2.1: die Behälterraum-Absorbereinrichtung ist im Bereich einer Druckentlastungseinrichtung des Behälterraumes angeordnet,
- 2.2: die Druckminderung und die Wärmeabsorbtion bei Störlichtbögen im Behälterraum und/oder im Kabelanschlussraum und/oder im Sammelschienenanschlussraum erfolgt über die Behälter-Absorbereinrichtung und/oder über die Kabelanschluss-Absorbereinrichtung,
vorgesehen.

Mit dieser konstruktiven Ausgestaltung der Mittelspannungsschaltanlage ist ein hoher Verwirbelungsgrad der heißen Gase im Störlichtbogenfall erreicht, der neben dem größeren Abkühlungseffekt zusätzlich noch eine Vergleichmäßigung des Druckanstiegs innerhalb der Mittelspannungsschaltanlage auf niedrigerem Niveau bewirkt und somit erheblich zur Steigerung der Anlagen- und der Personensicherheit beiträgt.

Für eine Mittelspannungsschaltanlage nach Anspruch 2, mit einem Kanal zur Druckminderung bei Störlichtbögen sind gemäß einer weiteren vorteilhaften Ausgestaltung der Erfindung die Merkmale
- 3.1: die Kanäle zur Druckminderung bei Störlichtbögen sind bei der Mittelspannungsschaltanlage als Kanal-Absorbereinrichtung ausgeführt,
- 3.2: die Kanal-Absorbereinrichtung ist im rückseitigen und/oder seitlicher. Bereich der Mittelspannungsschaltanlage angeordnet.
- 3.3: die Druckminderung und die Wärmeabsorbtion bei Storlichtbögen im Behälterraum und/oder im Kabelanschlussraum und/oder im Sammelschienenanschlussraum erfolgt über die der Behälterraum-Absorbereirichtung und/oder der Kabelanschlussraum-Absorbereinrichtung gemeinsam zugeordnete Kanal-Absorbereinrichtung des Kanals der Mittelspannungsschaltanlage,
vorgesehen.

Bei dieser Bauform der Mittelspannungsschaltanlagen, die frei in geschlossenen Gebäuden installiert sind, ist eine zielgerichtete Herausführung der heißen Gase durch den Behälterraum und dem Kabelanschlussraum für den Fall realisiert, daß die Störlichtbögen direkt im Behälterraum auftreten. Durch die Druck- und Wärmeverteilung in dem sich an den Behälterraum anschließenden Kabelanschlussraum ist ein erhöhter Druck- und Wärmeabbau bereits innerhalb der Funktionsräume der Mittelspannungsschaltanlage erreicht. Beide Umstände tragen gleichfalls wesentlich zur Erhöhung der Personensicherheit im Zusammenhang mit diesen Mittelspannungsschaltanlagen in den Gebäuden bei.

Für eine Mittelspannungsschaltanlage nach Patentanspruch 2, mit einem unterhalb des Kabelanschlussraums angeordneten durch eine Schachtöffnung erreichbaren Kabelanschlussschacht,
sind die Merkmale
- 4.1: die Kabelanschlussraum-Absorbereinrichtung der Mittelspannungsschaltanlage ist durch eine Schacht-Absorbereinrichtung realisiert,
- 4.2: die Schacht-Absorbereinrichtung ist im rückseitigen und/oder seitlichen Bereich der Mittelspannungsschaltanlage angeordnet,
- 4.3: die Druckminderung und die Wärmeabsorbtion bei Störlichtbögen im Behälterraum und/oder im Kabelanschlussraum und/oder im Sammelschienenanschlussraum erfolgt über die Behälterraum-Absorbereinrichtung und/oder die Schacht-Absorbereinrichtung,
erreicht.

Bei einer Mittelspannungsschaltanlage dieser Bauform mit einem integrierten Kabelanschlussschacht werden die beim Störlichtbogen entstehenden Gase durch die im Bodenbereich der Mittelspannungsschaltanlage vorgesehene Schacht-Absorbereinrichtung nach außen geleitet. Der Kabelanschlussraum ist mit dem Kabelanschlussschacht durch eine entsprechende Schachtöffnung direkt verbunden. Der Abkühlungsgrad der heißen Gase und deren Druckabbau sind durch die weitere Verlängerung der Durchflusswege und durch die Erhöhung des Raumvolumens zusätzlich in ihrer Wirkungsweise gesteigert. In diesem Zusammenhang ist es gegebenenfalls erforderlich, wärmeempfindliche Kabelanschlüsse zusätzlich durch geeignete Blechabdeckungen vor Beschädigungen zu schützen.

Eine weitere vorteilhafte Ausgestaltung der Erfindung der Mittelspannungsschaltanlage nach Anspruch 2 und 3 sieht die Merkmale
- 5.1: die Behälterraum-Absorbereinrichtung und die Kabelanschluss-Absorbereinrichtung sind räumlich nebeneinander angeordnet,
- 5.2: die Behälterraum-Absorbereinrichtung und die Kabelanschluss-Absorbereinrichtung sind längsmittenaxial annähernd rechtwinklig versetzt zueinander angeordnet,
vor.

Mit dieser konstruktiven Ausgestaltung der Mittelspannungsschaltanlage ist ein hoher Verwirbelungsgrad der heißen Gase im Störlichtbogenfall erreicht, der neben dem größeren Abkühlungseffekt zusätzlich noch eine Vergleichmässigung des Druckanstiegs innerhalb der Mittelspannungsschaltanlage auf niedrigerem Niveau bewirkt und damit ebenfalls zur Steigerung der Personensicherheit beiträgt.

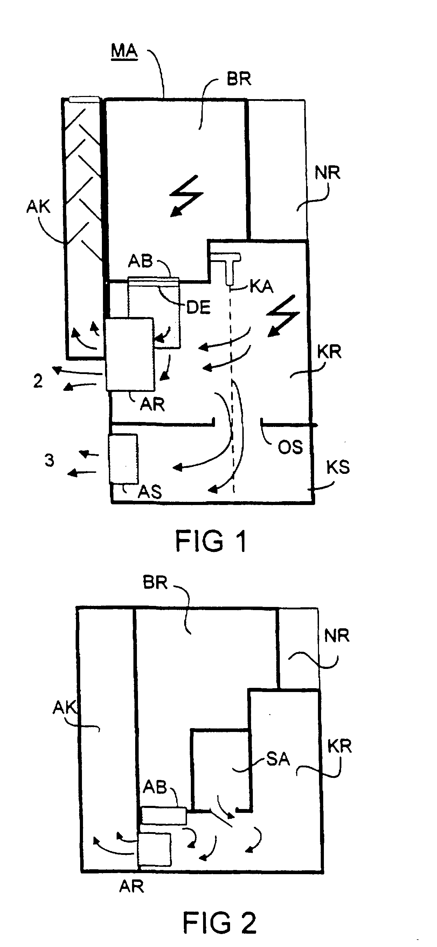

Die Erfindung wird durch zwei durch die Figuren 1 und 2 dargestellte Ausführungsbeispiele näher erläutert, in denen lediglich die zum Verständnis der Erfindung wesentlichen Funktionselemente bzw. deren räumliche Zuordnung innerhalb der unterschiedlichen Mittelspannungsschaltanlagen dargestellt sind.

Die Mittelspannungsschaltanlage MA des durch die Figur 1 dargestellten Ausführungsbeispiels enthält im wesentlichen den der Aufnahme von Schaltgeräten dienenden Behälterraum BR, an deren Bodenbereich sich der für die Kabelanschlüsse KA vorgesehene Kabelanschlussraum KR anschließt. Die Mittelspannungsschaltanlage MA enthält außerdem den Niederspannungsraum NR, der mit entsprechenden Schaltgeräten für den Niederspannungsteil der Mittelspannungsschaltanlage MA bestückt ist. Die Mittelspannungsschaltanlage MA enthält außerdem an seiner Rückseite einen Kanal zur Abführung der bei Störlichtbögen entstehenden Gase, der als Kanalabsorbereinrichtung AK ausgeführt ist.
Weiterhin ist ersichtlich, daß der Behälterraum BR im Bodenbereich, in dem sich die Druckentlastungseinrichtung DE befindet, mit der Behälterraum-Absorbereinrichtung AB ausgestattet ist. Im Falle eines Störlichtbogens im Behälterraum BR werden die sich dort bildenden heißen Gase, die außerdem einen erheblichen Druckanstieg im Behälterraum BR bewirken, über diese Behälterraum-Absorbereinrichtung AB aus der Mitttelspannungsschaltanlage MA herausgeführt.

Darüber hinaus ist der darunterliegende Kabelanschlussraum KR mit der Kabelanschluss-Absorbereinrichtung AR versehen, durch die im Störlichtbogenfall sowohl die im Behälterraum BR als auch die im Kabelanschlussraum KR entstehenden Gase in Pfeilrichtung 1 zu der Kanal-Absorbereinrichtung AK geleitet werden. Innerhalb der Kanal-Absorbereinrichtung AK sind bekanntermaßen gelochte Umlenkbleche vorgesehen, um somit durch die Verlängerung der Durchflusswege der Gase sowohl deren Abkühlung als auch deren Druckminderung zu bewirken.

Andere Bauformen von Mittelspannungsschaltanlagen sehen im Bodenbereich derselben sogenannte Kabelanschlussschächte KS vor, die zur Abführung der Gase anstatt der Kabelanschluss-Absorbereinrichtung AR eine Schacht-Absorbereinrichtung AS aufweisen. Hier werden im Störlichtbogenfall die Gase aus dem Behälterraum BR und/oder aus dem Kabelanschlussraum KR direkt entsprechend der Pfeilrichtung 3 aus der Mittelspannungsschaltanlage MA herausgeführt.
Bei diesen Mittelspannungsschaltanlagen sind gegebenenfalls die Zuführungen der Kabel im Kabelanschlussschacht KS beispielsweise durch entsprechende Blechabdeckungen vor den thermischen Belastungen ausreichend zu schützen.

Bei Mittelspannungsschaltanlagen MA ohne Kanäle zur Druckminderung werden im Störlichtbogenfall die heißen Gase aus den Behälterräumen BR und/oder aus den Kabelanschlussräumen KR direkt durch die Behälterraum-Absorbereinrichtungen AB und/oder die Kabelanschluss-Absorbereinrichtungen AR gemäss der Pfeilrichtung 2 aus den Mittelspannungsschaltanlagen MA herausgeführt.

Die Figur 2 zeigt eine Bauform einer Mittelspannungsschaltanlage, bei der zwischen dem Behälterraum BR und dem Kabelanschlussraum KR ein Sammelschienenanschlussraum SA vorgesehen ist. Der Sammelschienenanschlussraum SA enthält in seinem Bodenbereich eine nicht bezeichnete Öffnung, die im Störlichtbogenfall eine Verbindung zu dem Kabelanschlussraum KR herstellt. Wie bereits vorab beschrieben, werden die heißen und unter Druck stehenden Gase von dem Sammmelschienenanschlussraum SA durch den sich anschließenden Kabelanschlussraum KR mittels der Kabelanschluss-Absorbereinrichtung AR in die Kanal-Absorbereinrichtung AK geleitet, um von dort aus gefahrlos druckgemindert und abgekühlt aus der Mittelspannungsschaltanlage heraus ins Freie abgeführt werden zu können. Sämtliche Bauformen der Mittelspannungsschaltanlagen, ob luftisolierte Mittelspannungsschaltanlagen ohne Behälter oder gasisolierte Mittelspannungsschaltanlagen mit Behälter, sowie Mittelspannungsschaltanlagen mit und ohne Druckminderungskanälen, gewährleisten eine zielgerichtete Gasströmung, bei der sich die im Störlichtbogenfall im Behälterraum und/oder im Kabelanschlussraum und/oder im Sammelschienenanschlussraum unter Druck entstehenden heißen Gase vor Austritt aus der entsprechenden Mittelspannungsschaltanlage derart abgekühlt und druckgemindert sind, daß die Gase ohne Gefährdung von Personen und Gebäudeteilen im Umkreis der Mittelspannungsschaltanlagen aus diesen herausgeführt werden können.

Die den Funktionsraumbereichen zugeordneten Absorbereinrichtungen lassen sich praktisch in allen Anlagentypen der Mittelspannungstechnik einsetzen, die im Zusammenhang mit Störlichbogenfällen eine gefahrlose Entsorgung der heißen Gase gewährleisten müssen.

## Patentansprüche

1. Mittelspannungsschaltanlage mit mehreren gekapselten Schaltfeldern zur Aufnahme von Schaltanlagenelementen, wie Schaltgeräte, Kabelanschlüsse und Sammelschienen, mit zur Druckentlastung bei Störlichtbögen im rückwärtigen Bereich vorgesehenen Kanälen,
**gekennzeichnet durch** die Merkmale
1.1 jedes Schaltfeld der Mittelspannungsschaltanlage (MA) ist in den Schaltanlageelementen separat zugeordnete Funktionsraumbereiche (BR, KR, KS) aufgeteilt,
1.2 die Funktionsraumbereiche (BR, KR, KS) weisen jeweils eine eigene Absorbereinrichtung (AB, AR, AS) auf,
1.3 mindestens eine der den Funktionsraumbereichen (BR, KR, KS) zugeordnete Absorbereinrichtung (AB, AR, AS) ist aus einem rückseitigen und/oder seitlichen Bereich der Mittelspannungsschaltanlage (MA) herausgeführt.

2. Mittelspannungsschaltanlage nach Patentanspruch 1,
**gekennzeichnet durch** die Merkmale
2.1 die Behälterraum-Absorbereinrichtung (AB) ist im Bereich einer Druckentlastungseinrichtung (DE) des Behälterraumes (BR) angeordnet,
2.2 die Druckminderung und die Wärmeabsorbtion bei Störlichtbögen im Behälterraum (BR) und/oder im Kabelanschlußraum (KR) und/oder im Sammelschienenanschlussraum (SA) erfolgt über die Behälter-Absorbereinrichtung (AB) und/oder über die Kabelanschluss-Absorbereinrichtung (AR).

3. Mittelspannungsschaltanlage nach Anspruch 2,
**gekennzeichnet durch** die Merkmale
3.1 die Kanäle zur Druckminderung bei Störlichtbögen sind bei der Mittelspannungsschaltanlage (MA) als Kanal-Absorbereinrichtung (AK) ausgeführt,
3.2 die Kanal-Absorbereinrichtung (AK) ist im rückseitigen und/oder seitlichen Bereich der Mittelspannungsschaltanlage (MA) angeordnet.
3.3 die Druckminderung und die Wärmeabsorbtion bei Störlichtbögen im Behälterraum (BR) und/oder im Kabelanschlußraum (KR) und/oder im Sammelschienenanschlussraum (SA) erfolgt über die der Behälterraum-Absorbereirichtung (AB) und/oder der Kabelanschlussraum-Absorbereinrichtung (AR) gemeinsam zugeordnete Kanal-Absorbereinrichtung (AK) des Kanals der Mittelspannungsschaltanlage (MA) .

4. Mittelspannungsschaltanlage nach Patentanspruch 2, mit einem unterhalb des Kabelanschlussraums angeordneten durch eine Schachtöffnung erreichbaren Kabelanschlussschacht,
**gekennzeichnet durch** die Merkmale
4.1 die Kabelanschlussraum-Absorbereinrichtung (AR) der Mittelspannungsschaltanlage (MA) ist **durch** eine Schacht-Absorbereinrichtung (AS) realisiert,
4.2 die Schacht-Absorbereinrichtung (AS) ist im rückseitigen und/oder seitlichen Bereich der Mittelspannungsschaltanlage (MA) angeordnet,
4.3 die Druckminderung und die Wärmeabsorbtion bei Störlichtbögen im Behälterraum (BR) und/oder im Kabelanschlussraum (KR) und/oder im Sammelschienenanschlussraum (SA) erfolgt über die Behälterraum-Absorbereinrichtung (AB) und/oder die Schacht-Absorbereinrichtung (AS).

5. Mittelspannungsschaltanlage nach Anspruch 2 und 3,
**gekennzeichnet durch** die Merkmale
5.1 die Behälterraum-Absorbereinrichtung (AB) und die Kabelanschluss-Absorbereinrichtung (AR) sind räumlich nebeneinander angeordnet,
5.2 die Behalterraum-Absorbereinrichtung (AB) und die Kabelanschluss-Absorbereinrichtung (AR) sind langsmittenaxial annähernd rechtwinklig versetzt zueinander angeordnet.

## Claims

1. Medium-voltage switchgear station with several encapsulated switch bays for receiving switchgear elements, such as switching devices, cable connections and busbars, provided with channels in the rear area for pressure relief in the event of accidental arcs,
**characterised by** the following features:
1.1 each switch bay of the medium-voltage switchgear station (MA) is divided into functional compartments (BR, KR, KS) separately assigned to the switchgear elements,
1.2 each of the functional compartments (BR, KR, KS) has its own absorber device (AB, AR, AS),
1.3 at least one of the absorber devices (AB, AR, AS) assigned to the functional compartments (BR, KR, KS) is led out of a rear and/or a side area of the medium-voltage switchgear station (MA).

2. Medium-voltage switchgear station according to Claim 1,
**characterised by** the following features:
2.1 The housing chamber absorber device (AB) is arranged in the area of a pressure-relief device (DE) of the housing chamber (BR),
2.2 the pressure reduction and the heat absorption during accidental arcing in the housing chamber (BR) and/or in the cable terminal compartment (KR) and/or in the busbar terminal compartment (SA) is achieved via the housing chamber absorber device (AB) and/or the cable terminal absorber device (AR).

3. Medium-voltage switchgear station according to Claim 2,
**characterised by** the following features:
3.1 in the medium-voltage switchgear station (MA) the channels for pressure reduction in the event of accidental arcing are constructed as a channel absorber device (AK),
3.2 the channel absorber device (AK) is arranged in the rear and/or the side area of the medium-voltage switchgear station (MA),
3.3 the pressure reduction and the heat absorption in the event of accidental arcing in the housing chamber (BR) and/or in the cable terminal compartment (KR) and/or in the busbar terminal compartment (SA) is performed via the channel absorber device (AK) of the channel of the medium-voltage switchgear station (MA), that is jointly assigned to the housing chamber absorber device (AB) and/or to the cable terminal compartment absorber device (AR).

4. Medium-voltage switchgear station according to Claim 2, with a cable terminal pit arranged underneath the cable terminal compartment, accessible via a shaft opening,
**characterised by** the following features:
4.1 the cable terminal compartment absorber device (AR) of the medium-voltage switchgear station (MA) is realised by a shaft absorber device (AS),
4.2 the shaft absorber device (AS) is arranged in the rear and/or the side area of the medium-voltage switchgear station (MA),
4.3 the pressure reduction and the heat absorption in the event of accidental arcing in the housing chamber (BR) and/or in the cable terminal compartment (KR) and/or in the busbar terminal compartment (SA) is performed via the housing chamber absorber device (AB) and/or the shaft absorber device (AS).

5. Medium-voltage switchgear station according to Claim 2 and 3, **characterised by** the following features:
5.1 the housing chamber absorber device (AB) and the cable terminal absorber device (AR) are spatially arranged alongside each other,
5.2 the housing chamber absorber device (AB) and the cable terminal absorber device (AR) are arranged approximately at right-angles to each other centrally about the longitudinal axis.

## Revendications

1. Appareillage de commutation moyenne tension, comprenant plusieurs panneaux d'interrupteurs blindés de réception d'éléments d'appareillage de commutation, comme des appareils de commutation, des bornes de câbles et des rails collecteurs, comprenant des canaux prévus dans la zone arrière pour le déchargement en pression d'arcs gênants, **caractérisé par** les caractéristiques :
1.1 Chaque tableau de commutateur de l'appareillage (MA) de commutation moyenne tension est subdivisé en des zones (BR, KR, KS) d'espace fonctionnel associées séparément aux éléments de l'appareillage de commutation ;
1.2 Les zones (BR, KR, KS) d'espace fonctionnel présentent respectivement un dispositif (AB, AR, AS) d'absorbeur propre ;
1.3 Au moins l'un des dispositifs (AB, AR, AS) d'absorbeur associés aux zones (BR, KR, KS) d'espace fonctionnel est sorti d'une zone arrière eVou latérale de l'appareillage (MA) de commutation moyenne tension.

2. Appareillage de commutation moyenne tension selon la revendication 1, **caractérisé par** les caractéristiques :
2.1 Le dispositif (AB) à absorbeur de chambre de récipient est disposé dans la région d'un dispositif (DE) de décharge de pression de la chambre (BR) de récipient,
2.2 L'abaissement de la pression et l'absorption de la chaleur pour des arcs électriques gênants dans la chambre (BR) de récipient et/ou dans la chambre (KR) de raccordement de câbles et/ou dans la chambre (SA) de raccordement de rails collecteurs s'effectue par le dispositif (AB) absorbeur de récipient et/ou par le dispositif (AR) absorbeur de raccordement de câbles.

3. Appareillage de commutation moyenne tension selon la revendication 2, **caractérisé par** les caractéristiques :
3.1 Les canaux d'amoindrissement de la pression en cas d'arcs électriques gênants sont réalisés dans l'appareillage (MA) de commutation moyenne tension sous la forme de dispositif (AK) à absorbeur de canal ;
3.2 Le dispositif (AK) à absorbeur de canal est disposé dans la zone arrière et/ou la zone latérale de l'appareillage (MA) de commutation moyenne tension ;
3.3 L'abaissement de la pression et l'absorption de la chaleur s'il se produit des arcs électriques gênants dans la chambre (BR) de récipient et/ou dans la chambre (KR) de raccordement de câbles et/ou dans la chambre (SA) de bornes de rails collecteurs s'effectue par le dispositif (AB) absorbeur de la chambre de récipient et/ou par le dispositif (AK) absorbeur de canal de l'appareillage de commutation moyenne tension qui est associé en commun au dispositif (AR) à absorbeur de la chambre de raccordement de câbles.

4. Appareillage de commutation moyenne tension selon la revendication 2, comprenant un puits de raccordement de câbles disposé en dessous de la chambre de raccordement de câbles et pouvant être atteint par une ouverture de puits, **caractérisé par** les caractéristiques :
4.1 Le dispositif (AR) à absorbeur de la chambre de raccordement de câbles de l'appareillage (MA) de commutation moyenne tension est réalisé par un dispositif (AS) à absorbeur de puits ;
4.2 Le dispositif (AS) à absorbeur de puits est disposé dans la zone arrière et/ou latérale de l'appareillage (MA) de commutation moyenne tension ;
4.3 L'abaissement de la pression et l'absorption de chaleur pour des arcs électriques gênants dans la chambre (BR) de récipient et/ou dans la chambre (KR) de raccordement de câbles et/ou dans la chambre (SA) de raccordement de rails collecteurs s'effectue par le dispositif (AB) à absorbeur de la chambre de récipient et/ou par le dispositif (AS) à absorbeur de puits.

5. Appareillage de commutation moyenne tension selon la revendication 2 ou 3, **caractérisé par** les caractéristiques :
5.1 Le dispositif (AB) à absorbeur de chambre de récipient et le dispositif (AR) à absorbeur de raccordement de câbles sont disposés côte à côte dans l'espace ;
5.2 Le dispositif (AB) à absorbeur de chambre de récipient et le dispositif (AR) à absorbeur de raccordement de câbles sont disposés décalés l'un par rapport à l'autre à peu près à angle droit par rapport à l'axe médian longitudinal.
